# EUROPÄISCHE PATENTSCHRIFT

(11) **EP 3 424 097 B1**
(45) Veröffentlichungstag und Bekanntmachung des Hinweises auf die Patenterteilung: **11.12.2019**
(21) Anmeldenummer: 17707335.0
(22) Anmeldetag: 27.02.2017
(51) Int. Cl.: H01M 4/04, H01M 4/62, H01M 4/36, H01M 4/38, H01M 4/587, H01M 10/052, C01B 33/02, H01M 4/134, H01M 4/1395

(54) **VERFAHREN ZUR VERARBEITUNG VON ELEKTRODENMATERIALIEN FÜR BATTERIEN**
METHOD FOR PROCESSING ELECTRODE MATERIALS FOR BATTERIES
PROCÉDÉ DE TRAITEMENT DE MATÉRIAUX D'ÉLECTRODES POUR BATTERIES

(30) Priorität: 01.03.2016 DE 102016203352
(43) Veröffentlichungstag der Anmeldung: 09.01.2019
(73) Patentinhaber: Wacker Chemie AG, 81737 München (DE)
(72) Erfinder: MAURER, Robert, 81373 München (DE); BERNHARD, Rebecca, 81373 München (DE); BRÄUNLING, Daniel, 84489 Burghausen (DE); HANELT, Eckhard, 82269 Geltendorf (DE)
(74) Vertreter: Ege, Markus
(86) Internationale Anmeldenummer: PCT/EP2017/054528
(87) Internationale Veröffentlichungsnummer: WO 2017/148872

(56) Entgegenhaltungen:
- WO-A1-2014/202529
- CN-A- 104 716 312
- DE-T2- 69 110 438
- US-A1- 2014 030 603

## Beschreibung

Die Erfindung betrifft Aktivmaterialpartikel in Form von dispergierbaren Granulaten bestehend aus Siliciumpartikeln und Bindemittel und ein Verfahren zur Verarbeitung von Elektrodenmaterialien für Batterien, Aktivmaterialpartikel in Form dieser dispergierbaren Granulate.

Batterien sind elektrochemische Energiespeicher, die beispielsweise im Bereich der tragbaren Elektronik, für Werkzeuge und auch für elektrisch angetriebene Transportmittel, wie Fahrräder oder Automobile, genutzt werden. Man unterscheidet Primär- und Sekundärzellen, wobei für letztere auch die Bezeichnung Akkumulatoren oder Akkus verwendet wird. Heute sind Lithiumionen-Batterien die praxistauglichen elektrochemischen Energiespeicher mit den höchsten gravimetrischen und volumetrischen Energiedichten.

Elektrodenmaterialien enthalten Aktivmaterialpartikel, die durch Aufnehmen beziehungsweise Abgeben von Ionen als Speicher für elektrische Ladung dienen können. Als Material für die negative Elektrode ("Anode") von Lithiumionen-Akkumulatoren ist gegenwärtig graphitischer Kohlenstoff weit verbreitet. Nachteilig ist jedoch dessen relativ niedrige elektrochemische Kapazität von theoretisch höchstens 372 mAh pro Gramm Graphit, die nur etwa einem Zehntel der mit Lithiummetall theoretisch erreichbaren elektrochemischen Kapazität entspricht. Seit langem wird deshalb nach alternativen Materialien für Anoden geforscht, insbesondere im Bereich von mit Lithium legierenden (Halb-) Metallen. Als geeigneter Kandidat wurde hierbei Silicium identifiziert. Silicium bildet mit Lithium binäre elektrochemisch aktive Legierungen, die sehr hohe Lithiumgehalte und beispielsweise für Li_{4.4}Si theoretische spezifische Kapazitäten im Bereich von 4200 mAh pro Gramm Silicium erreichen können. Bezüglich Größe und Gestalt der Siliciumpartikel wird in der Literatur in unterschiedliche Richtungen gelehrt. So werden in der WO 2014/202529 insbesondere nanoskalige, nicht-aggregierte Siliciumpartikel und in der EP 1730800 nanoskalige, aggregierte Siliciumpartikel empfohlen. Grobteilige Siliciumpartikel mit Partikeldurchmessern von 1 bis 10 µm sind beispielsweise in der US 2003235762 für Elektrodenmaterialien beschrieben.

Zur Herstellung von Aktivmaterialpartikeln geeigneter Größe sind Mahlverfahren sehr geläufig. Es kommen Trockenmahlverfahren und insbesondere zur Herstellung kleinteiligerer Partikel Nassvermahlung zum Einsatz, wie beispielsweise in der WO-A 14202529 beschrieben. Die Nassvermahlung ergibt Partikel, die in einem flüssigen Medium dispergiert sind. Die Trocknungsprodukte solcher Dispersionen lassen sich jedoch nur schwer wieder vollständig redispergieren, so dass nach Redispergieren größere Agglomerate der primären Aktivmaterialpartikel vorliegen. Ähnliches gilt auch für die durch Trockenvermahlung erhaltenen Partikel. Eine möglichst vollständige Dispergierung der Aktivmaterialpartikel ist aber erforderlich, weil Elektrodenbeschichtungen, die Agglomerate enthalten, Batterien ergeben, die beim Be- und Entladen aufgrund der dabei auftretenden Volumenänderung der Aktivmaterialpartikel, insbesondere im Fall von Siliciumpartikeln, vermehrt Schaden nehmen können. Eine möglichst vollständige Dispergierung der Aktivmaterialpartikel ist außerdem erwünscht, um eine gleichmäßige Abmischung dieser Partikel mit den weiteren Bestandteilen der Elektrodenmaterialien und schließlich eine leitfähige und definierte Anbindung der Partikel in der Elektrode zu erreichen.

In der Praxis werden zur Herstellung von Elektrodenbeschichtungen auch deswegen pulverförmige Aktivmaterialpartikel bevorzugt, weil dadurch der Einsatz unterschiedlicher flüssiger Medien bei der Nassvermahlung und der Elektrodenherstellung möglich wird. Beim Mischen von flüssigen Zubereitungen mit weiteren Lösungsmitteln besteht zudem die Gefahr, dass es zu Unverträglichkeiten wie beispielsweise Koagulieren von Rezepturbestandteilen kommt. Dabei darf das trockene Aktivmaterial durchaus in Form von Agglomeraten aus mehreren Aktivmaterialpartikeln vorliegen, solange sich die Agglomerate wieder redispergieren lassen und dabei wieder kleinteilige Partikel freisetzen. Der Einsatz in fester Form vorliegender Aktivmaterialpartikel eröffnet bei deren Verarbeitung zu Elektrodenmaterialien eine größere Flexibilität, wie beispielsweise bei der Wahl des Feststoffgehalts oder flüssigen Rezepturbestandteilen. Auch sind trockene Zubereitungen im Allgemeinen lagerstabiler und sowohl beim Transport als auch in der industriellen Praxis einfacher handhabbar als Suspensionen mit hohem Feststoffgehalt.

Ein weiteres Problem mit Pulvern von nano- oder µ-skaligen Partikeln besteht in deren Neigung zur Staubbildung. Staubbildung ist nach Möglichkeit zu vermeiden.

Vor diesem Hintergrund bestand die Aufgabe, Aktivmaterialpartikel für Elektrodenmaterialien von Batterien, insbesondere von Lithiumionen-Batterien, in Form von dispergierbaren Granulaten bereitzustellen. Solche dispergierbaren Granulate sollten möglichst vollständig in ihre Primärpartikel redispergiert und möglichst gleichmäßig in den Elektrodenmaterialien verteilt werden können. Darüber hinaus sollten entsprechende dispergierbaren Granulate im Vergleich zu reinen Aktivmaterialpartikeln nach Möglichkeit weniger zur Staubbildung neigen.

Diese Aufgabe wurde überraschenderweise gelöst, indem Mischungen enthaltend Aktivmaterialpartikel und Dispergierflüssigkeiten in Gegenwart von Bindemitteln getrocknet wurden. Die so erhaltenen dispergierbaren Granulate lassen sich in der gewünschten Weise in Elektrodenmaterialien für Batterien einarbeiten und zeigen zudem ein reduziertes Staubverhalten.

Aus Verfahren zur Herstellung von Kohlenstoff beschichteten Siliciumpartikeln ist die Trocknung von Siliciumpartikeln bekannt. Darin werden Dispersionen von Siliciumpartikeln und speziellen Kohlenstoff-Precursor-Molekülen getrocknet, anschließend pyrolysiert und erst nach dieser chemischen Modifikation in Anodenmaterialien für Lithiumionen-Batterien eingearbeitet, wie beispielsweise in der CA 2752844 beschrieben. In der CN 103187556 werden Dispersionen von Siliciumpartikeln, Polymeren und Graphit zunächst sprühgetrocknet und anschließend pyrolysiert. Zur Herstellung von Siliciumpartikeln mit spezieller Morphologie empfiehlt die US 2014/0162129 die Sprühtrocknung von Dispersionen enthaltend Partikel von Silicium, Siliciumoxid, Metallsilicide und Kohle oder spezielle Polymere als Kohlenstoff-Precursor.

In der DE 691 10438 T2 werden in Wasser redispergierbare Pulver von wasserunlöslichen Vinyl- und/oder Acrylpolymeren beschrieben, die Silicon als Hydrophobierungsadditiv enthalten, und die beispielsweise mittels Sprühtrocknung hergestellt werden. Solche Polymerpulver finden Anwendung als Hilfsstoffe für hydraulisch abbindende Bindemittel in der Bauindustrie.

Ein Gegenstand der Erfindung sind Verfahren zur Verarbeitung von Elektrodenmaterialien für Batterien, gemäß Anspruch 1.

Die im Schritt a) durch Trocknen erhaltenen Aktivmaterialgranulate sind im Allgemeinen Agglomerate von Aktivmaterialpartikeln. In Folge des erfindungsgemäßen Verfahrens sind die Aktivmaterialpartikel in den Agglomeraten im Allgemeinen ganz oder teilweise mit Bindemittel umhüllt. Solche Aktivmaterialgranulate sind deshalb im Allgemeinen signifikant größer als die als Ausgangsstoff eingesetzten Aktivmaterialpartikel. Auf Zugabe von Lösungsmittel zu den Aktivmaterialgranulaten und gegebenenfalls zusätzlichem externen Energieeintrag, insbesondere mechanische Beanspruchung, beispielsweise durch mechanisches Rühren oder Ultraschallbehandlung, können die zur Herstellung der Aktivmaterialgranulate eingesetzten Aktivmaterialpartikel (Primärpartikel) wieder freigesetzt werden.

Ein Elektrodenmaterial im Sinne der vorliegenden Erfindung basiert auf einer Mischung aus mehreren Stoffen, die es erlaubt, durch Oxidations- oder Reduktionsreaktionen elektrochemische Energie in einer Batterie zu speichern, beziehungsweise einer Batterie zu entnehmen. Das Elektrodenmaterial, das in der geladenen Batterie unter Ablauf einer oxidativen elektrochemischen Reaktion Energie liefert, wird als Anodenmaterial oder auch als negatives Elektrodenmaterial bezeichnet.

Bevorzugte Bindemittel sind Polyacrylsäure oder deren Alkali-, insbesondere Lithium- oder Natrium-Salze, Polyvinylalkohole, Cellulose oder Cellulosederivate, Polyalkylenoxide, wie Polyethylenglykol, Polyvinylidenfluorid, Polytetrafluorethylen, Polyolefine, Polyimide, insbesondere Polyamidimide, oder thermoplastische Elastomere, insbesondere Ethylen-Propylen-Dien-Terpolymere. Besonders bevorzugt sind Cellulose-Derivate, insbesondere Carboxymethylcellulose. Besonders bevorzugte Salze sind deren Alkali-, insbesondere Lithium- oder Natrium-Salze.

Die Mischungen im Schritt a) enthalten vorzugsweise ≤ 95 Gew.%, mehr bevorzugt ≤ 50 Gew.%, noch mehr bevorzugt ≤ 35 Gew.%, besonders bevorzugt ≤ 20 Gew.%, am meisten bevorzugt ≤ 10 Gew.% und am allermeisten bevorzugt ≤ 5 Gew.% Bindemittel. Die Mischungen im Schritt a) enthalten vorzugsweise ≥ 0,05 Gew.%, besonders bevorzugt ≥ 0,3 Gew.% und am meisten bevorzugt ≥ 1 Gew.% Bindemittel. Die vorgenannten Angaben in Gew.% beziehen sich jeweils auf das Trockengewicht der Mischungen im Schritt a) .

Trockengewicht bezieht sich allgemein auf das Gesamtgewicht einer Zusammensetzung abzüglich des Gewichts der enthaltenen Dispergierflüssigkeit beziehungsweise Lösungsmittel.

Als Dispergierflüssigkeit können organische und/oder anorganische Lösungsmittel eingesetzt werden. Es können auch Mischungen aus zwei oder mehr Dispergierflüssigkeiten eingesetzt werden. Ein Beispiel für ein anorganisches Lösungsmittel ist Wasser. Organische Lösungsmittel sind beispielsweise Kohlenwasserstoffe, Ester oder vorzugsweise Alkohole. Die Alkohole enthalten vorzugsweise 1 bis 7 und besonders bevorzugt 2 bis 5 Kohlenstoffatome. Beispiele für Alkohole sind Methanol, Ethanol, Propanol, Butanol und Benzylalkohol. Bevorzugt sind Ethanol und 2-Propanol. Kohlenwasserstoffe enthalten vorzugsweise 5 bis 10 und besonders bevorzugt 6 bis 8 Kohlenstoffatome. Kohlenwasserstoffe können beispielsweise aliphatisch oder aromatisch sein. Beispiele für Kohlenwasserstoffe sind Toluol und Heptan. Bei Estern handelt es sich im Allgemeinen um Ester von Carbonsäuren und Alkylalkoholen, wie beispielsweise Ethylacetat. Die Dispergierflüssigkeit liegt im Allgemeinen bei Raumtemperatur in flüssiger Form vor und hat bei 20°C eine Viskosität von vorzugsweise ≤ 100 mPas und besonders bevorzugt ≤ 10 mPas. Bei Verwendung von Silicium als Aktivmaterial ist die Dispergierflüssigkeit bevorzugt inert oder schwach reaktiv gegenüber Silicium.

Die Mischungen im Schritt a) enthalten vorzugsweise ≥ 10 Gew.%, mehr bevorzugt ≥ 30 Gew.%, besonders bevorzugt ≥ 50 Gew.% und am meisten bevorzugt ≥ 80 Gew.% an Dispergierflüssigkeit. Die Mischungen im Schritt a) enthalten vorzugsweise ≤ 99,8 Gew.%, besonders bevorzugt ≤ 95 Gew.% und am meisten bevorzugt ≤ 90 Gew.% an Dispergierflüssigkeit. Die vorgenannten Angaben in Gew.% beziehen sich jeweils auf das Gesamtgewicht der Mischungen im Schritt a).

Aktivmaterialpartikel im Sinne der vorliegenden Erfindung sind allgemein Partikel, die durch Aufnehmen beziehungsweise Abgeben von Ionen als Speicher für elektrische Ladung dienen können.

Die Aktivmaterialpartikel umfassen Siliciumpartikel. Die Aktivmaterialpartikel haben vorzugsweise bestimmte Schüttguteigenschaften. Schüttguteigenschaften sind beispielsweise in der internationalen Norm FEM 2.581 der "Federation Europeenne de la Manutention" beschrieben. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben sind zum Beispiel Kornform und Korngrößenverteilung (FEM 2.581 / FEM 2.582: General characteristics of bulk products with regard to their classification and their symbolization).

Nach DIN ISO 3435 können Schüttgüter in Abhängigkeit der Beschaffenheit der Kornkanten in sechs unterschiedliche Kornformen untergliedert werden:
I: scharfe Kanten mit ungefähr gleichen Ausmaßen in den drei Dimensionen (Bsp.: Würfel);
II: scharfe Kanten, deren eine deutlich länger ist als die anderen beiden (Bsp.: Prisma, Klinge);
III: scharfe Kanten, deren eine deutlich kleiner ist als die beiden anderen (Bsp.: Platte, Schuppen);
IV: runde Kanten mit ungefähr gleichen Ausmaßen in den drei Dimensionen (Bsp.: Kugel);
V: runde Kanten, in einer Richtung deutlich größer als in den anderen beiden (Bsp.: Zylinder, Stange);
VI: faserig, fadenförmig, lockenförmig, verschlungen.

Die in Schritt a) eingesetzten Aktivmaterialpartikel haben vorzugsweise Kornformen I bis VI, mehr bevorzugt I, II, III oder IV und besonders bevorzugt I oder IV gemäß DIN ISO 3435.

Siliciumpartikel können aus elementarem Silicium, einem Siliciumoxid oder einer binären, ternären oder multinären Silicium/Metall-Legierung (mit beispielsweise Li, Na, K, Sn, Ca, Co, Ni, Cu, Cr, Ti, Al, Fe) bestehen. Bevorzugt wird elementares Silicium eingesetzt, insbesondere da dieses eine vorteilhaft hohe Speicherkapazität für Lithium-Ionen aufweist.

Unter elementarem Silicium ist im Allgemeinen hochreines Polysilicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, C) aufweisen kann, zu verstehen.

Falls die Siliciumpartikel ein Siliciumoxid enthalten, dann liegt die Stöchiometrie des Oxids SiOₓ bevorzugt im Bereich 0 < x < 1,3. Falls die Siliciumpartikel ein Siliciumoxid mit höherer Stöchiometrie enthalten, dann ist dessen Schichtdicke auf der Oberfläche bevorzugt kleiner als 10 nm.

Wenn die Siliciumpartikel mit einem Alkalimetall M legiert sind, dann liegt die Stöchiometrie der Legierung M_{y}Si bevorzugt im Bereich 0 < y < 5. Die Siliciumpartikel können gegebenenfalls prälithiiert sein. Für den Fall, dass die Siliciumpartikel mit Lithium legiert sind, liegt die Stöchiometrie der Legierung Li_{z}Si bevorzugt im Bereich 0 < z < 2,2.

Besonders bevorzugt sind Siliciumpartikel die ≥ 80 Mol% Silicium und/oder ≤ 20 Mol% Fremdatome, ganz besonders bevorzugt ≤ 10 Mol% Fremdatome enthalten.

Die Oberfläche der Siliciumpartikel kann gegebenenfalls durch eine Oxidschicht oder durch andere anorganische und organische Gruppen abgedeckt sein. Besonders bevorzugte Siliciumpartikel tragen auf der Oberfläche Si-OH- oder Si-H-Gruppen oder kovalent angebundene organische Gruppen, wie beispielsweise Alkohole oder Alkene. Durch die organischen Gruppen kann beispielsweise die Oberflächenspannung der Siliciumpartikel gesteuert werden. Diese kann so an die Lösemittel oder Bindemittel angepasst werden, die bei der Herstellung der Granulate oder bei der Herstellung der Elektrodenbeschichtungen eingesetzt werden.

Die Siliciumpartikel der Mischungen im Schritt a) weisen vor der Trocknung volumengewichtete Partikelgrößenverteilungen mit Medianwerten des Durchmessers d₅₀ von vorzugsweise 0,03 bis 100,0 µm, mehr bevorzugt 0,05 bis 20,0 µm, besonders bevorzugt 0,1 bis 10,0 µm und am meisten bevorzugt 0,15 bis 7,0 µm auf.

Die volumengewichtete Partikelgrößenverteilung ist bestimmbar durch statische Laserstreuung unter Anwendung des Fraunhofer- oder des Mie-Modells mit dem Messgerät Horiba LA 950 mit Ethanol oder Isopropanol als Dispergiermedium für die Siliciumpartikel.

Die Siliciumpartikel sind vorzugsweise nicht agglomeriert, insbesondere nicht aggregiert.

Aggregiert bedeutet, dass sphärische oder weitestgehend sphärische Primärpartikel, wie sie beispielsweise zunächst in Gasphasenprozessen zur Herstellung von Siliciumpartikeln gebildet werden, im weiteren Reaktionsverlauf des Gasphasenprozesses zusammenwachsen und auf diese Weise Aggregate bilden. Diese Aggregate können im weiteren Reaktionsverlauf Agglomerate bilden. Agglomerate sind eine Zusammenballung von Primärpartikeln oder Aggregaten ohne kovalente chemische Bindungen. Agglomerate können in manchen Fällen mit Knet- und Dispergierverfahren wieder in die Aggregate aufgespalten werden, häufig ist dieses jedoch nicht möglich. Aggregate lassen sich mit diesen Verfahren nicht oder nur teilweise in die Primärpartikel zerlegen. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen können dagegen nicht zwischen Aggregaten oder Agglomeraten unterscheiden.

Die Siliciumpartikel haben eine Sphärizität von vorzugsweise 0,3 ≤ ψ ≤ 1, besonders bevorzugt 0,4 ≤ ψ ≤ 1 und am meisten bevorzugt 0,5 ≤ ψ ≤ 1. Die Sphärizität ψ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Mischungen im Schritt a) enthalten vorzugsweise ≥ 5 Gew.%, mehr bevorzugt ≥ 50 Gew.%, noch mehr bevorzugt ≥ 65 Gew.%, besonders bevorzugt ≥ 80 Gew.%, am meisten bevorzugt ≥ 90 Gew.% und am allermeisten bevorzugt ≥ 95 Gew.% Aktivmaterialpartikel. Die Mischungen im Schritt a) enthalten vorzugsweise ≤ 99,95 Gew.%, besonders bevorzugt ≤ 99,7 Gew.% und am meisten bevorzugt ≤ 99 Gew.% Aktivmaterialpartikel. Die vorgenannten Angaben in Gew.% beziehen sich jeweils auf das Trockengewicht der Mischungen im Schritt a).

Die Siliciumpartikel können beispielsweise mittels Gasphasenabscheidung oder vorzugsweise durch Mahlprozesse hergestellt werden.

Als Mahlprozesse kommen Trocken- oder Nassmahlprozesse in Betracht. Hierbei werden vorzugsweise Strahlmühlen, wie Gegenstrahlmühlen, oder Prallmühlen, Planetenkugelmühlen oder Rührwerkskugelmühlen eingesetzt. Die Strahlmühlen weisen bevorzugt einen integrierten Windsichter auf, der statisch oder dynamisch ausgebildet sein kann, oder sie werden im Kreislauf mit einem externen Windsichter betrieben.

Die Nassmahlung erfolgt im Allgemeinen in einer Suspension mit organischen oder anorganischen Dispergiermedien. Bevorzugte Dispergiermedien sind die weiter oben beschriebenen Dispergierflüssigkeiten.

Bei der Nassmahlung werden vorzugsweise Mahlkörper verwendet, deren mittlerer Durchmesser 10 bis 1000 mal größer ist als der 90%-Perzentilwert d₉₀ des Durchmessers des eingesetzten Mahlguts, bezogen auf die Partikelgrößenvolumenverteilung. Besonders bevorzugt sind Mahlkörper, deren mittlerer Durchmesser 20 bis 200-mal größer ist als der d₉₀-Wert der Ausgangsverteilung des Mahlguts.

Die Mischungen im Schritt a) und/oder vorzugsweise im Schritt b) können zusätzlich ein oder mehrere elektrisch leitende Komponenten und/oder ein oder mehrere Additive enthalten. In Schritt b) können gegebenenfalls zusätzliche Mengen an Bindemittel beigemischt werden.

Beispiele für elektrisch leitende Komponenten sind Graphitpartikel, Leitruß, Kohlenstoff-Nanoröhrchen oder metallische Partikel, wie beispielsweise Kupferpartikel. Klarstellend sei angemerkt, dass die elektrisch leitenden Komponenten kein erfindungsgemäßes Aktivmaterial, insbesondere kein Silicium umfassen.

Die elektrisch leitenden Komponenten haben vorzugsweise Strukturen von ≤ 1 µm. Die Graphitpartikel haben bevorzugt eine volumengewichtete Partikelgrößenverteilung zwischen den Durchmesser-Perzentilen d₁₀ > 0,2 µm und d₉₀ < 200 µm. Es kann natürlicher oder synthetischer Graphit eingesetzt werden. Die Primärpartikel von Leitruß haben vorzugsweise eine volumengewichtete Partikelgrößenverteilung zwischen den Durchmesser-Perzentilen d₁₀ = 5 nm und d₉₀ = 200 nm. Die Primärpartikel von Leitruß können auch kettenartig verzweigt sein und bis zu µm-große Aggregate bilden. Kohlenstoff-Nanoröhrchen haben vorzugsweise Durchmesser von 0,4 bis 200 nm, besonders bevorzugte 2 bis 100 nm und am meisten bevorzugt 5 bis 30 nm. Die metallischen Partikel haben eine volumengewichtete Partikelgrößenverteilung, die bevorzugt zwischen den Durchmesser-Perzentilen d₁₀ = 5 nm und d₉₀ = 5 µm und besonders bevorzugt zwischen den Durchmesser-Perzentilen d₁₀ = 10 nm und d₉₀ = 800 nm liegt.

Vorzugsweise enthalten die Mischungen im Schritt a) keine elektrisch leitenden Komponenten, insbesondere keinen Graphit. Beispiele für Additive sind Porenbildner, Verlaufsmittel, Dotiermittel oder Stoffe, die die elektrochemische Stabilität der Elektrode in der Batterie verbessern.

Die Mischungen im Schritt a) enthalten vorzugsweise 0 bis 30 Gew.%, besonders bevorzugt 0,01 bis 15 Gew.% und am meisten bevorzugt 0,1 bis 5 Gew.% Additive, bezogen auf das Trockengewicht der Mischungen im Schritt a). In einer bevorzugten, alternativen Ausführungsform enthalten die Mischungen im Schritt a) keine Additive.

Die im Schritt a) erhaltenen Aktivmaterialgranulate haben ein mittleres Volumen, das vorzugsweise mindestens zehnmal größer und besonders bevorzugt mindestens 50 mal größer ist als das mittlere Volumen der Primärpartikel der in Schritt a) eingesetzten Aktivmaterialpartikel.

Das mittlere Volumen der Aktivmaterialgranulate ist vorzugsweise kleiner als 100 mm³. Dies ist vorteilhaft für die Handhabbarkeit der Granulate als Schüttgut.

Das mittlere Volumen der Partikel und Granulate wird berechnet aus dem äquivalenten Kugelvolumen für den mit statischer Laserstreuung gemessenen Median der Partikeldurchmesser, bezogen auf die jeweiligen Partikelgrößenvolumenverteilungen.

Die Größe der Aktivmaterialgranulate kann durch das Trocknungsverfahren im Schritt a) beeinflusst werden. Die Granulate aus Schritt a) können auch mit herkömmlichen Methoden der mechanischen Verfahrenstechnik zerkleinert werden. Dabei sind solche Methoden bevorzugt, bei denen nur wenig Feinanteil erzeugt wird. Über die Partikelgröße der Granulate kann beispielsweise deren genaue Dosierbarkeit bei der Herstellung von Elektrodentinten für Batterieelektroden beeinflusst werden.

Die im Schritt a) erhaltenen Aktivmaterialgranulate haben vorzugsweise die Kornformen I, II, III oder IV, besonders bevorzugt die Kornformen I oder IV und ganz besonders bevorzugt die Kornform IV gemäß DIN ISO 3435.

Die im Schritt a) erhaltenen Aktivmaterialgranulate sind nicht mit Kohlenstoff beschichtet. Ein weiterer Gegenstand der Erfindung sind Aktivmaterialpartikel in Form von dispergierbaren Granulaten bestehend aus ≥ 95 Gew.%, bezogen auf das Trockengewicht der Aktivmaterialpartikel in Form von dispergierbaren Granulaten, Siliciumpartikeln,
einem oder mehreren Bindemitteln ausgewählt aus der Gruppe umfassend Polyacrylsäure oder deren Salze, Polyvinylalkohole, Cellulose oder Cellulosederivate, Polyalkylenoxide, Polyvinylidenfluorid, Polytetrafluorethylen, Polyolefine, Polyimide und Ethylen-Propylen-Dien-Terpolymere und
gegebenenfalls einem oder mehreren Additiven.
Die weiteren Ausführungsformen und Einsatzmengen der Bestandteile dieser Zusammensetzungen entsprechen den obigen Angaben für den erfindungsgemäßen Schritt a).

Die Herstellung der Mischungen für Schritt a) kann durch Mischen ihrer einzelnen Bestandteile erfolgen und ist an keine besondere Vorgehensweise gebunden. Das Mischen kann in gängigen Mischvorrichtungen durchgeführt werden, wie beispielsweise in Rotor-Stator-Maschinen, Hochenergiemühlen, Planetenknetern, Rührwerkskugelmühlen, Rüttelplatten, Dissolvern, Rollbänken oder Ultraschallgeräten. Beispielsweise können Aktivmaterialpartikel enthaltende Suspensionen, Bindemittel und gegebenenfalls zusätzliche Dispergierflüssigkeit gemischt werden. Vorzugsweise werden Bindemittel in einer Dispergierflüssigkeit gelöst oder dispergiert und anschließend einer Aktivmaterialpartikel enthaltenden Suspension zugegeben. Alternativ können Bindemittel, gegebenenfalls gelöst oder dispergiert in Dispergierflüssigkeit, vor, während oder nach dem Mahlen, insbesondere der Nassvermahlung, einer Aktivmaterialpartikel enthaltenden Suspension zugegeben werden.

Die Trocknung im erfindungsgemäßen Schritt a) kann beispielsweise mittels Wirbelschichttrocknung, Gefriertrocknung, thermischer Trocknung, Trocknung im Vakuum oder vorzugsweise mittels Sprühtrocknung erfolgen. Es können die hierfür gängigen Anlagen und Bedingungen Anwendung finden.

Die Trocknung kann in Umgebungsluft, synthetischer Luft, Sauerstoff oder vorzugsweise in einer Inertgasatmosphäre, beispielsweise in Stickstoff- oder Argon-Atmosphäre erfolgen. Im Allgemeinen wird bei Normaldruck oder bei reduziertem Druck getrocknet. Die Trocknung erfolgt im Allgemeinen bei Temperaturen von ≤ 400°C, bevorzugt ≤ 200°C und besonders bevorzugt ≤ 150°C und in einer bevorzugten Ausführungsform bei Temperaturen von -50°C bis 200°C.

Die Gefriertrocknung erfolgt generell bei Temperaturen unterhalb des Gefrierpunkts der zu trocknenden Mischung, vorzugsweise bei Temperaturen im Bereich von -120°C bis 0°C und besonders bevorzugt bei -20°C bis -60°C. Der Druck liegt vorzugsweise zwischen 0,005 und 0,1 mbar.

Die Trocknung im Vakuum erfolgt vorzugsweise bei Temperaturen von 40°C bis 100 °C und Drücken von 1 bis 10⁻³ mbar.

Die Sprühtrocknung kann beispielsweise in Sprühtrocknungsanlagen erfolgen, in denen die Zerstäubung mittels Ein-, Zwei- oder Mehrstoffdüsen oder mit einer rotierenden Scheibe erfolgt. Die Eintrittstemperatur der zu trocknenden Mischung in die Sprühtrocknungsanlage ist vorzugsweise größer oder gleich der Siedetemperatur der zu trocknenden Mischung und besonders bevorzugt um ≥ 10°C höher als die Siedetemperatur der zu trocknenden Mischung. Beispielsweise beträgt die Eintrittstemperatur vorzugsweise 80°C bis 200°C, besonders bevorzugt 100°C bis 150°C. Die Austrittstemperatur ist vorzugsweise ≥ 30°C, besonders bevorzugt ≥ 40°C und am meisten bevorzugt ≥ 50°C. Im Allgemeinen liegt die Austrittstemperatur im Bereich von 30°C bis 100°C, bevorzugt von 45°C bis 90°C. Der Druck in der Sprühtrocknungsanlage ist bevorzugt der Umgebungsdruck. In der Sprühtrocknungsanlage haben die versprühten Mischungen Primärtröpfchengrößen von vorzugsweise 1 bis 1000 µm, besonders bevorzugt 2 bis 600 µm und am meisten bevorzugt 5 bis 300 µm. Über die Einstellungen der Inlet-Temperatur, des Gasflusses (Flow), sowie der Pumprate (Feed), die Wahl der Düse, des Aspirators, die Wahl der Dispergierflüssigkeit oder auch der Feststoffkonzentration der Sprühsuspension lassen sich die Größe der Primärpartikel, Restfeuchte im Produkt und die Ausbeute des Produkts in an sich bekannter Weise einstellen. Beispielsweise werden bei höherer Feststoffkonzentration der Sprühsuspension Primärpartikel mit größeren Partikelgrößen erhalten, ein höherer Sprühgasfluss (Flow) führt dagegen zu kleineren Partikelgrößen.

Bei den sonstigen Trocknungsverfahren wird vorzugsweise bei Temperaturen von 0°C bis 200°C, besonders bevorzugt bei 10°C bis 180°C und am meisten bevorzugt bei 30°C bis 150°C getrocknet. Der Druck bei den sonstigen Trocknungsverfahren beträgt vorzugsweise 0,5 bis 1,5 bar. Die Trocknung kann beispielsweise durch Kontakt mit heißen Oberflächen, Konvektion oder Strahlungswärme erfolgen. Bevorzugte Trockner für die sonstigen Trocknungsverfahren sind Wirbelschichttrockner, Schneckentrockner, Schaufeltrockner und Extruder.

Die im Schritt a) erhaltenen Aktivmaterialgranulate werden im Allgemeinen direkt im erfindungsgemäßen Schritt b) eingesetzt. Vorzugsweise werden die im Schritt a) erhaltenen Aktivmaterialgranulate vor Durchführung des Schrittes b) keiner Umsetzung, insbesondere keiner Pyrolyse oder Carbonisierung, unterzogen.

Im Allgemeinen entsprechen die volumengewichteten Partikelgrößenverteilungen der im Schritt b) erhaltenen, dispergierten Aktivmaterialpartikeln im Wesentlichen den Partikelgrößenverteilungen der im Schritt a) eingesetzten Aktivmaterialpartikel vor der Trocknung.

Die im Schritt b) erhaltenen dispergierten Aktivmaterialpartikel haben volumengewichtete Partikelgrößenverteilungen mit Medianwerten des Durchmessers d₅₀ von vorzugsweise 0,03 bis 100,0 µm, mehr bevorzugt 0,05 bis 20,0 µm, besonders bevorzugt 0,1 bis 10,0 µm und am meisten bevorzugt 0,15 bis 7,0 µm.

Als elektrisch leitende Komponenten für Schritt b) ist Graphit bevorzugt, gegebenenfalls in Kombination mit einem oder mehreren weiteren elektrisch leitenden Komponenten. Der Anteil der elektrisch leitenden Komponenten im Schritt b) beträgt vorzugsweise 0 bis 80 Gew.%, besonders bevorzugt 1 bis 50 Gew.% und am meisten bevorzugt 2 bis 30 Gew.%, bezogen auf das Trockengewicht der Zusammensetzungen im Schritt b).

Im Schritt b) können gegebenenfalls weitere Bindemittel zugegeben werden. Hierbei können die oben genannten Bindemittel eingesetzt werden. Der Anteil der Bindemittel im Schritt b) beträgt vorzugsweise 0,5 bis 25 Gew.% und besonders bevorzugt 1 bis 20 Gew.%, bezogen auf das Trockengewicht der Zusammensetzungen im Schritt b).

Der Anteil an Additiven im Schritt b) beträgt vorzugsweise 0 bis 60 Gew.%, besonders bevorzugt 0 bis 5 Gew.%, bezogen auf das Gesamtgewicht der Zusammensetzungen im Schritt b).

Als Lösungsmittel im Schritt b) können die für den Schritt a) genannten Dispergierflüssigkeiten eingesetzt werden. Weitere Beispiele für Lösungsmittel sind Ether, wie Tetrahydrofuran, Pyrrolidone, wie N-Methylpyrrolidon oder N-Ethylpyrrolidon, Aceton, Dimethylsulfoxid oder Dimethylacetamid. Bevorzugte Lösungsmittel sind Wasser, Kohlenwasserstoffe, wie Hexan oder Toluol, Tetrahydrofuran, Pyrrolidone, wie N-Methylpyrrolidon oder N-Ethylpyrrolidon, Aceton, Ethylacetat, Dimethylsulfoxid, Dimethylacetamid oder Ethanol.

Das Mischen der einzelnen Komponenten im Schritt b) ist an keine besondere Vorgehensweise gebunden und kann in herkömmlichen Mischvorrichtungen erfolgen, wie beispielsweise Rotor-Stator-Maschinen, Hochenergiemühlen, Planetenknetern, Rührwerkskugelmühlen, Rüttelplatten oder Ultraschallgeräten. Das Dispergieren im Schritt b) wird dabei im Allgemeinen durch externen Energieeintrag, insbesondere mechanische Beanspruchung der Granulate unterstützt. Vorzugsweise werden die im Schritt a) erhaltenen Aktivmaterialgranulate im Schritt b) zunächst in einem oder mehreren Lösungsmitteln dispergiert und anschließend mit den etwaigen weiteren Komponenten gemischt. Die weiteren Komponenten können dabei als Mischung eingesetzt werden. Im Schritt b) zusätzlich beigemischte Bindemittel werden vorzugsweise in Form einer Lösung oder Dispersion in einem oder mehreren Lösungsmitteln eingesetzt.

Ein weiterer Gegenstand der Offenbarung sind Verfahren zur Herstellung von Elektroden für Batterien, insbesondere für Lithiumionen-Batterien, dadurch gekennzeichnet, dass die im Schritt b) hergestellten Mischungen auf ein elektrisch leitendes Substrat aufgetragen und anschließend getrocknet werden.

Vorzugsweise haben die dispergierten Aktivmaterialpartikel aus Schritt b) volumengewichtete Partikelgrößenverteilungen mit einem 90%-Perzentilwert des Durchmessers d₉₀, der kleiner ist als die Dicke einer mit dem erfindungsgemäßen Elektrodenmaterial hergestellten trockenen Beschichtung. Besonders bevorzugt ist d₉₀ kleiner als 50% der Dicke der Beschichtung und ganz besonders bevorzugt ist d₉₀ kleiner als 20% der Dicke der Beschichtung. Diese Maßgabe ist hilfreich, um Überkorn praktisch auszuschließen.

Ein weiterer Gegenstand der Offenbarung ist die Verwendung der erfindungsgemäß hergestellten Elektrodenmaterialien für die Herstellung von Batterien, insbesondere Lithiumionen-Batterien. Eine Batterie umfasst im Allgemeinen eine erste Elektrode als Kathode, eine zweite Elektrode als Anode, eine zwischen beiden Elektroden angeordnete Membran als Separator, zwei Anschlüsse an den Elektroden, ein die genannten Teile aufnehmendes Gehäuse sowie einen Elektrolyten, mit dem der Separator und die beiden Elektroden getränkt sind.

Im Fall einer Lithiumionen-Batterie wird ein Elektrolyt verwendet, der im Allgemeinen Lithium-Ionen enthält. Erfindungsgemäß hergestellte Elektroden, die Siliciumpartikel als Aktivmaterialpartikel enthalten, werden besonders bevorzugt als negative Elektrode oder Anode eingesetzt.

Die Batterie kann in allen üblichen Formen, beispielsweise in gewickelter, gefalteter oder gestapelter Form hergestellt werden.

Die Herstellung entsprechender Batterien unter Einsatz der erfindungsgemäß hergestellten Elektrodenmaterialien kann beispielsweise durchgeführt werden wie in der WO 2014/202529 beschrieben.

Vorteilhafterweise werden mit der erfindungsgemäßen Vorgehensweise lagerstabile Aktivmaterialgranulate zugänglich, die sich in Lösungsmitteln in effizienter Weise dispergieren lassen. Durch Einsatz solcher Granulate können bei der Elektrodentintenverarbeitung Lösungsmittelanteile niedriger gehalten werden, was vorteilhaft für die Qualität der Elektroden ist. Durch die Trocknung mit Bindemitteln werden kleinteilige Partikel in größere Granulate überführt. Die erfindungsgemäßen Granulate neigen bei der Handhabung zu keiner oder nur geringfügiger Staubbildung. Insbesondere bei der Verwendung von nanoskaligen Aktivmaterial-Primärpartikeln wird so die sicherheitsproblematische Staubbildung umgangen. Deswegen können die für das Arbeiten mit kleinteiligen Partikeln erforderlichen zusätzlichen Sicherheitsmaßnahmen entfallen und deren Verarbeitung vereinfacht werden.

Die Teilchengrößenverteilungen der im Schritt b) redispergierten Partikel und der im Schritt a) für die Trocknung eingesetzten Partikel (Primärpartikel) entsprechen sich weitgehend. Somit kann mit der erfindungsgemäßen Vorgehensweise das Auftreten von Agglomeraten in den für die Elektrodenherstellung verwendeten Mischungen zumindest weitgehend vermieden werden, und es wird überraschenderweise kein zusätzliches Überkorn erzeugt. In den erfindungsgemäß hergestellten Lithiumionen-Batterien trägt dies dazu bei, dass die Aktivmaterialpartikel, insbesondere die Siliciumpartikel, effizient leitfähig angebunden sind. Durch Vermeidung der Agglomeratbildung kann auch die Lebensdauer von Lithiumionen-Batterien gesteigert werden. Beim Be- und Entladen der Lithiumionen-Batterien erfahren die Siliciumpartikel eine Volumenänderung, die insbesondere bei Vorliegen größerer Siliciumagglomerate zu einer Schädigung der Anodenschicht führen kann. Durch Vermeiden von Agglomeraten kann einer solchen Schädigung entgegengewirkt werden. Die Aktivität der Lithiumionen-Batterien wird durch die erfindungsgemäße Trocknung der Siliciumpartikel überraschenderweise nicht beeinträchtigt.

Die nachfolgenden Beispiele dienen zur weiteren Erläuterung der Erfindung.

Es wurden 8 Beispiele von Elektrodenmaterialien mit Aktivmaterialpartikeln aus Silicium unterschiedlicher Größe in Kombination mit unterschiedlichen Anteilen an Bindemitteln und Anwendung unterschiedlicher Trocknungsmethoden hergestellt (siehe Tabelle 1). Die Beispiele B.2 bis B.6 sind erfindungsgemäß, die Beispiele V.1, V.7 und V.8 dienen zum Vergleich.

**Tabelle 1:**

| | Ausgangspartikelgröße ^{a)} | Einsatz von NaCMC ^{d)} | Methode zur Trocknung | Größe der Si-Granulate ^{b)} | Partikelgröße nach Redispergierung ^{c)} | |
|---|---|---|---|---|---|---|
| | | | | | d₅₀ [µm] | d₉₀ [µm] |
| V.1 | d₅₀ = 0,81 µm | - | Gefriertrocknung | 0,1 - 5 mm | 0,98 | 2,79 |
| B.2 | | + | | | 0,83 | 2,09 |
| B.3 | d₉₀ = 1,94 µm | + | Vakuumtrocknung | | 0,81 | 1,82 |
| B.4 | | + | Sprühtrocknung | 2 bis 15 µm | 0,82 | 1,89 |
| B.5 | d₅₀ = 0,18 µm | + | | | 0,19 | 0,39 |
| B.6 | | ++ | | | 0,19 | 0,33 |
| V.7 | d₉₀ = 0,33 µm | - | | keine Bildung von Granulaten | entfällt | |
| V.8 | | - | Gefriertrocknung | 0,1 - 5 mm | 0,37 | 3,87 |

| | | | | | | |
|---|---|---|---|---|---|---|
| a) Median d₅₀ und 90%-Perzentil d₉₀ der volumengewichteten Partikelgrößenverteilungen der Siliciumpartikel vor Trocknung bestimmt mittels statischer Laserstreuung im Horiba LA 950 in einer mit Ethanol verdünnten Suspension. b) Partikelgrößenbereich der getrockneten Siliciumgranulate bestimmt mittels Lichtmikroskopie und REM. c) Median d₅₀ und 90%-Perzentil d₉₀ der volumengewichteten Partikelgrößenverteilungen der Siliciumpartikel nach Redispergierung bestimmt mittels o.g. statischer Laserstreuung. d) Eingesetzte Menge von Natriumcarboxymethylcellulose NaCMC: - ohne NaCMC; +: NaCMC:Si = 0,5:20 Gewichtsanteile; ++: NaCMC:Si = 8:20 Gewichtsanteile. | | | | | | |

### Herstellung der Siliciumgranulate im Schritt a):

Bei den erfindungsgemäßen Beispielen B.2 bis B.4 wurden je 171 g einer 1,4%igen wässrigen Lösung von Natriumcarboxymethylcellulose (NaCMC) bei 25°C vorgelegt und unter Rühren mit 221 g destilliertem Wasser verdünnt. Anschließend wurden unter Rühren mit einem Dissolver je 329 g einer 29%igen Dispersion von durch Nassmahlung hergestellten Siliciumpartikeln in Ethanol mit Teilchengrößen entsprechend der Angabe in Tabelle 1 zugegeben.

Bei dem erfindungsgemäßen Beispiel B.5 wurde 35 g einer 1,4%igen wässrigen Lösung von NaCMC bei 25°C vorgelegt und unter Rühren mit 32 g destilliertem Wasser verdünnt. Anschließend wurden unter Rühren mit einem Dissolver 86 g einer 23%igen Dispersion von durch Nassmahlung hergestellten Siliciumpartikeln in Ethanol mit Teilchengrößen entsprechend der Angabe in Tabelle 1 zugegeben. Der Gewichtsanteil des Polymers NaCMC lag somit jeweils bei ca. 2,5 Gew.% bezogen auf das Trockengewicht von Silicium + NaCMC.

Beim erfindungsgemäßen Beispiel B.6 wurde 57 g einer 1,4%igen wässrigen Lösung von Natriumcarboxymethylcellulose (NaCMC) bei 25°C vorgelegt und unter Rühren mit 66 g destilliertem Wasser verdünnt. Anschließend wurde unter Rühren mit einem Dissolver 9 g einer 22%igen Dispersion von durch Nassmahlung hergestellten Siliciumpartikeln in Ethanol mit Teilchengrößen entsprechend der Angabe in Tabelle 1 zugegeben. Der Gewichtsanteil des Polymers NaCMC lag somit bei rund 29 Gew.% bezogen auf das Trockengewicht von Silicium + NaCMC.

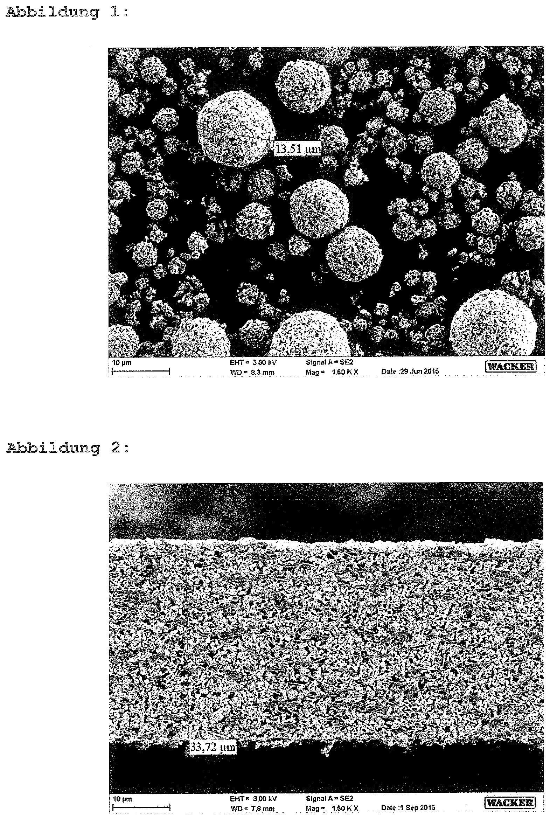

Die so erhaltenen homogenen Dispersionen wurden entsprechend der Angaben in Tabelle 1 mit den im Folgenden beschriebenen Trocknungsmethoden in Siliciumgranulate überführt. Im Falle der Gefriertrocknung und der Vakuumtrocknung wurden die Produkte in Form von Schollen erhalten, die anschließend in einem Mörser auf 0,1 - 5 mm grob zerkleinert wurden. Im Falle der Sprühtrocknung lagen die Produkte als kugelförmige Granulate mit Durchmessern im Bereich von 2 bis 15 µm vor. Der Feinanteil in den erfindungsgemäßen Trocknungsprodukten der Beispiele B.2 bis B.6 war gering. Die Abbildung 1 zeigt als Beispiel eine REM-Aufnahme der in B.4 mit 2,5 Gew.% NaCMC erhaltenen sprühgetrockneten Siliciumgranulate.

Die Vergleichsbeispiele V.1, V.7 und V.8 wurden unter Berücksichtigung der Maßgaben in Tabelle 1 analog ausgeführt wie das vorgenannte Beispiel B.2, jedoch wurde statt Zugabe der Natriumcarboxymethylcellulose-Lösung die entsprechende Menge Wasser (jeweils 171 g + 221 g) zugesetzt.

Zur Trocknung wurden die folgenden drei Verfahren eingesetzt:
1. Sprühtrocknung der Siliciumpartikel-Dispersionen Es wurde ein Sprühtrockner mit Zweistoffdüse (Büchi-Trockner B-290 mit InertLoop, Düse 150) verwendet. Der Sprühtrockner wurde mit Ethanol gespült. Danach wurden die Siliciumpartikel enthaltenden Dispersionen eingefüllt und unter Stickstoffatmosphäre bei Normaldruck getrocknet. Am Gerät wurden folgende Einstellungen gewählt: Inlet-Temperatur 120°C, Outlet-Temperatur 50°C bis 60°C. Verdüsungskomponente im geschlossenen Kreislauf war Stickstoff mit einem Gasfluss (Flow) von 601 1/h, Aspirator: 100%, Pumprate (Feed): 30%. Die getrockneten Siliciumgranulate wurden über einen Zyklon abgeschieden.
2. Gefriertrocknung der Siliciumpartikel-Dispersionen Die Siliciumpartikel-Dispersionen wurden in Greinerröhrchen abgefüllt, bei Umgebungsdruck mit flüssigem Stickstoff eingefroren und in einem Gefriertrockner (Modell Alpha 2-4LD Plus der Firma Martin Christ) bei einem Druck zwischen 0,005 und
   0,01 mbar während 2 Tagen lyophilisiert.
3. Thermische Trocknung der Siliciumpartikel-Dispersionen im Vakuum (Vakuum-Trocknung)
   Die Siliciumpartikel-Dispersionen wurden in einem Kolben mit Schlenk-Technik im Vakuum bei 3,5 ^{∗} 10⁻² mbar bei 50°C unter Rühren getrocknet, bis ein trockenes Granulat entstand.

### Redispergierung der Siliciumpartikel im Schritt b):

200 mg der Siliciumgranulate der Beispiele aus Tabelle 1 wurden in je 9 ml Wasser eingewogen und für 30 min mit einem Ultraschallgerät (Hielscher UIP250, Sonotrode LS2405) bei 50% Leistung und Cycleparameter 0,5 behandelt. Diese vergleichsweise starke mechanische Beanspruchung wurde gewählt, um die Partikel möglichst vollständig zu dispergieren.
Danach wurden die Partikelgrößenverteilungen in der Suspension mittels statischer Laserstreuung mit dem Meßgerät Horiba LA950 bestimmt. Als Dispergierflüssigkeit für die Messungen wurde Wasser verwendet, weil die Partikel für die nachfolgend beschriebene Elektrodenherstellung in Tinten mit Wasser als Lösungsmittel eingemischt wurden. Das Gerät zeigt die für die Messung optimale Verdünnung der Suspensionen selbst an.

### Herstellung von Elektrodenbeschichtungen:

Je 3,83 g Siliciumgranulat der Beispiele B.2 bis B.4 und V.1 wurden mit 19,53 g einer 1,4%igen wässrigen Lösung von Natriumcarboxymethylcellulose in einem Becher bei 25°C vorgelegt und mit einem Dissolver mit einer 20 mm Dissolverscheibe (Dispermat LC30 der Firma VMA-Getzmann) bei 4500 Umdrehungen pro Minute für 5 Minuten und anschließend für 30 Minuten bei 17000 U/min homogenisiert.
Anschließend wurden 1,37 g Graphit unter Rühren mit einem Speedmixer (SpeedMixer DAC 150 SP, Firma Hauschild) bei 3500 U/min eingemischt. Die so erhaltenen Mischungen wurden mit dem Dissolver während 5 Minuten bei 4500 U/min und 30 Minuten bei 12000 U/min homogenisiert. Danach wurde im Speedmixer für 5 Minuten bei 3500 U/min entgast.

Um Elektrodenbeschichtungen mit den Siliciumgranulaten der Beispiele B.5, B.6 und V.8 herzustellen, wurden 0,5 g des jeweiligen Granulats mit 14,3 g einer 1,4%igen wässrigen Lösung von NaCMC und 0,3 g Leitruß Super P in einem Becher bei 25°C vorgelegt und mit dem Dissolver mit einer 20 mm Dissolverscheibe bei 4500 Umdrehungen pro Minute für 5 Minuten und anschließend für 30 Minuten bei 17000 Umdrehungen pro Minute homogenisiert. Anschließend wurden 1,5 g Graphit unter Rühren mit dem Speedmixer bei 3500 Umdrehungen pro Minute eingemischt und wie zuvor beschrieben homogenisiert und abschließend entgast.

Die so erhaltenen pastösen Elektrodenmaterialien wurden mittels eines Filmziehrahmens mit 0,10 mm Spalthöhe (Erichsen, Modell 360) auf eine Kupferfolie mit Dicke von 0,030 mm (Schlenk Metallfolien, SE-Cu58) aufgebracht. Danach wurden diese Elektrodenbeschichtungen 60 min bei 80°C und Umgebungsdruck in einem Trockenschrank getrocknet.

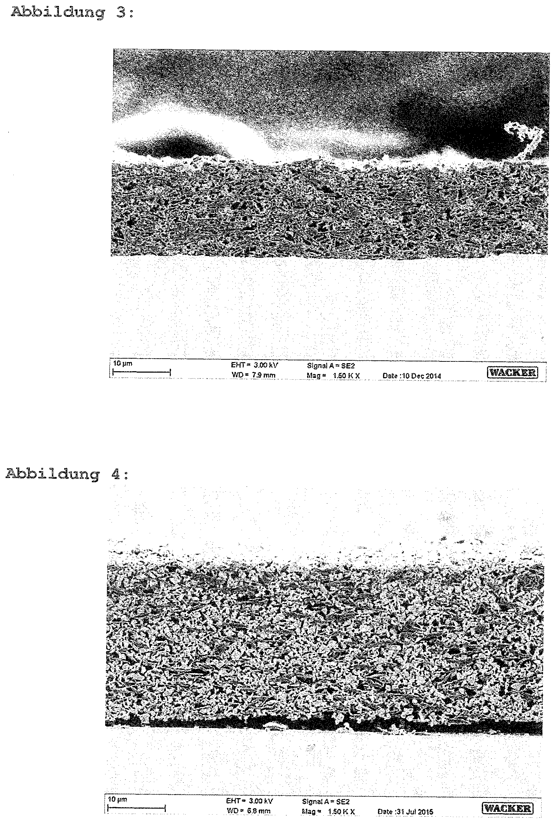

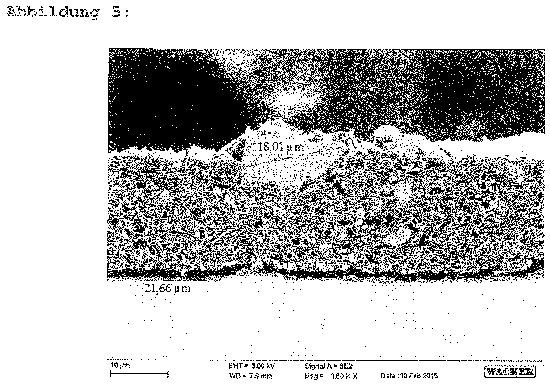

Die Abbildungen 2 bis 5 zeigen beispielhaft Ionenstrahl-Schnitte durch die getrockneten Elektrodenbeschichtungen, die mit einem Rasterelektronenmikroskop aufgenommen wurden:
Mit Beispiel B.4: Abbildung 2; mit Beispiel B.6: Abbildung 3; Beispiel B.2: Abbildung 4 und Vergleichsbeispiel V.8: Abbildung 5.
Die Siliciumpartikel (hellgrau) und die Graphitpartikel (dunkelgrau) sind mit Ausnahme der Vergleichsbeispiele gleichmäßig in den Beschichtungen verteilt. Die ursprünglich kugelförmigen mit NaCMC hergestellten Granulate, wie in Abbildung 1 gezeigt, haben sich aufgelöst, nur die ohne NaCMC hergestellten Produkte sind noch als gröbere Brocken in den Elektrodenbeschichtungen zu finden (siehe Abbildung 5).

### Diskussion der Beispiele:

Bei den erfindungsgemäßen Beispielen B.2 bis B.6 sind die Partikelgrößen nach der Redispergierung nahezu gleich den Ausgangspartikeln (Tabelle 1). Die mittels statischer Laserstreuung bestimmten 90%-Perzentilwerte d₉₀ der Ausgangspartikel sind ungefähr doppelt so groß wie die Mediane d₅₀ der volumengewichteten Partikelgrößenverteilungen der Siliciumpartikel. Das trifft unabhängig von der Trocknungsmethode auch für alle redispergierten Granulate zu, die NaCMC enthalten, jedoch nicht für die Vergleichsbeispiele V.1 und V.8. Die deutlich höheren d₉₀-Werte zeigen hier, dass sich die Partikel in den Vergleichsbeispielen trotz der starken mechanischen Beanspruchung nicht vollständig redispergieren ließen.
Dieser Unterschied tritt noch stärker hervor, wenn die Granulate beim Redispergieren weniger beansprucht wurden. Nach nur 10 min Ultraschallbehandlung war im Fall des Beispiels B.4 die mit statischer Laserstreuung bestimmte Partikelgrößenverteilung nahezu unverändert d₉₀ = 2,5 µm, dagegen wurde im Fall des Vergleichsbeispiels V.1 eine bimodale Verteilung mit einem deutlich höheren d₉₀ von 11,6 µm gefunden.
Die Siliciumgranulate mit NaCMC der Beispiele B.2 bis B.6 ergaben für alle Trocknungsmethoden homogene Elektrodenbeschichtungen frei von Agglomeraten, wie in den Abbildungen 2 bis 4 gezeigt, obwohl die mechanische Beanspruchung der Partikel bei der Herstellung des Elektrodenmaterials deutlich geringer war als bei der Redispergierung zur Messung der Partikelgrößenverteilungen in Tabelle 1.
Die durch Gefriertrockung ohne NaCMC hergestellten Produkte von Vergleichsbeispiel V.1 und V.8 führten unter den gleichen Bedingungen jedoch zu Elektrodenbeschichtungen mit Einschlüssen von groben Agglomeraten, die in Abbildung 5 als große helle Flecken zu erkennen sind.
Beim Versuch zur Sprühtrocknung ohne Verwendung eines Bindemittels im Vergleichsbeispiel V.7 konnte kein Produkt im Zyklon des Sprühtrockners abgeschieden werden. Es wurden keine erfindungsgemäßen Siliciumgranulate gebildet und deshalb auch keine weiterführenden Versuche zur Herstellung von Elektrodenbeschichtungen durchgeführt.

## Patentansprüche

1. Verfahren zur Verarbeitung von Elektrodenmaterialien für Batterien, **dadurch gekennzeichnet, dass**
a) Mischungen enthaltend ein oder mehrere Bindemittel, ein oder mehrere Dispergierflüssigkeiten und Aktivmaterialpartikel umfassend Siliciumpartikel getrocknet werden, wodurch Aktivmaterialpartikel in Form von dispergierbaren Granulaten erhalten werden,
mit der Maßgabe, dass die im Schritt a) erhaltenen Aktivmaterialpartikel in Form von dispergierbaren Granulaten nicht mit Kohlenstoff beschichtet sind, und
b) die im Schritt a) erhaltenen Aktivmaterialpartikel in Form von dispergierbaren Granulaten mit einem oder mehreren Lösungsmitteln gemischt werden, wobei Aktivmaterialpartikel, die zur Herstellung der Aktivmaterialpartikel in Form von dispergierbaren Granulaten eingesetzt wurden, wieder freigesetzt werden.

2. Verfahren zur Verarbeitung von Elektrodenmaterialien für Batterien gemäß Anspruch 1, **dadurch gekennzeichnet, dass** es sich bei den im Schritt a) durch Trocknen erhaltenen Aktivmaterialpartikel in Form von dispergierbaren Granulaten um Agglomerate von Aktivmaterialpartikeln handelt, die ganz oder teilweise mit Bindemittel umhüllt sind.

3. Verfahren zur Verarbeitung von Elektrodenmaterialien für Batterien gemäß Anspruch 1 bis 2, **dadurch gekennzeichnet, dass** die Aktivmaterialpartikel der Mischungen im Schritt a) vor der Trocknung volumengewichtete Partikelgrößenverteilungen mit Medianwerten des Durchmessers d₅₀ von 0,03 bis 100,0 µm aufweisen.

4. Verfahren zur Verarbeitung von Elektrodenmaterialien für Batterien gemäß Anspruch 1 bis 3, **dadurch gekennzeichnet, dass** die im Schritt b) erhaltenen dispergierten Aktivmaterialpartikel volumengewichtete Partikelgrößenverteilungen mit Medianwerten des Durchmessers d₅₀ von 0,03 bis 100,0 µm haben.

5. Verfahren zur Verarbeitung von Elektrodenmaterialien für Batterien gemäß Anspruch 1 bis 4, **dadurch gekennzeichnet, dass** ein oder mehrere Bindemittel ausgewählt werden aus der Gruppe umfassend Polyacrylsäure oder deren Alkalisalze, Polyvinylalkohole, Cellulose oder Cellulosederivate, Polyalkylenoxide, Polyvinylidenfluorid, Polytetrafluorethylen, Polyolefine, Polyimide und Ethylen-Propylen-Dien-Terpolymere.

6. Verfahren zur Verarbeitung von Elektrodenmaterialien für Batterien gemäß Anspruch 1 bis 5, **dadurch gekennzeichnet, dass** die im Schritt a) erhaltenen Aktivmaterialpartikel in Form von dispergierbaren Granulaten vor Durchführung des Schrittes b) keiner Umsetzung, insbesondere keiner Pyrolyse oder Carbonisierung, unterzogen werden.

7. Verfahren zur Herstellung von Elektroden für Batterien, **dadurch gekennzeichnet, dass** die Verfahrensprodukte aus Schritt b) der Ansprüche 1 bis 6 auf ein elektrisch leitendes Substrat aufgetragen und anschließend getrocknet werden.

8. Aktivmaterialpartikel in Form von dispergierbaren Granulaten bestehend aus
≥ 95 Gew.%, bezogen auf das Trockengewicht der Aktivmaterialpartikel in Form von dispergierbaren Granulaten, an Siliciumpartikeln,
einem oder mehreren Bindemitteln ausgewählt aus der Gruppe umfassend Polyacrylsäure oder deren Salze, Polyvinylalkohole, Cellulose oder Cellulosederivate, Polyalkylenoxide, Polyvinylidenfluorid, Polytetrafluorethylen, Polyolefine, Polyimide und Ethylen-Propylen-Dien-Terpolymere und gegebenenfalls einem oder mehreren Additiven.

9. Aktivmaterialpartikel in Form von dispergierbaren Granulaten gemäß Anspruch 8, **dadurch gekennzeichnet, dass** die dispergierbaren Granulate eine Kornform mit scharfen oder runden Kanten mit ungefähr gleichen Ausmaßen in den drei Dimensionen haben bestimmt gemäß DIN ISO 3435.

10. Aktivmaterialpartikel in Form von dispergierbaren Granulaten gemäß Anspruch 8 oder 9, **dadurch gekennzeichnet, dass** kein Graphit enthalten ist.

11. Aktivmaterialpartikel in Form von dispergierbaren Granulaten gemäß Anspruch 8 bis 10, **dadurch gekennzeichnet, dass** die Aktivmaterialpartikel in Form von dispergierbaren Granulaten nicht mit Kohlenstoff beschichtet sind.

## Claims

1. Method for processing electrode materials for batteries, **characterized in that**
a) mixtures containing one or more binders, one or more dispersing liquids and active material particles comprising silicon particles are dried to give active material particles in the form of dispersible granules,
and with the proviso that the active material particles in the form of dispersible granules obtained in step a) are not coated with carbon, and
b) the active material particles in the form of dispersible granules obtained in step a) are mixed with one or more solvents, with the active material particles which were used for producing the active material particles in the form of dispersible granules being released again.

2. Method for processing electrode materials for batteries according to Claim 1, **characterized in that** the activated material particles in the form of dispersible granules obtained by drying in step a) are agglomerates of active material particles which are completely or partly enveloped with binder.

3. Method for processing electrode materials for batteries according to either Claim 1 or 2, **characterized in that** the active material particles of the mixtures in step a) have, before drying, volume-based particle size distributions having medians of the diameter d₅₀ of from 0.03 to 100.0 µm.

4. Method for processing electrode materials for batteries according to any of Claims 1 to 3, **characterized in that** the dispersed active material particles obtained in step b) have volume-based particle size distributions having medians of the diameter d₅₀ of from 0.03 to 100.0 µm.

5. Method for processing electrode materials for batteries according to any of Claims 1 to 4, **characterized in that** one or more binders are selected from the group consisting of polyacrylic acid or alkali metal salts thereof, polyvinyl alcohols, cellulose or cellulose derivatives, polyalkylene oxides, polyvinylidene fluoride, polytetrafluoroethylene, polyolefins, polyimides and ethylene-propylene-diene terpolymers.

6. Method for processing electrode materials for batteries according to any of Claims 1 to 5, **characterized in that** the active material particles in the form of dispersible granules obtained in step a) are not subjected to any reaction, in particular not to any pyrolysis or carbonization, before carrying out step b).

7. Method for producing electrodes for batteries, **characterized in that** the process products from step b) of any of Claims 1 to 6 are applied to an electrically conductive substrate and subsequently dried.

8. Active material particles in the form of dispersible granules consisting of
≥ 95% by weight, based on the dry weight of the active material particles in the form of dispersible granules, of silicon particles,
one or more binder(s) selected from the group consisting of polyacrylic acid or salts thereof, polyvinyl alcohols, cellulose or cellulose derivatives, polyalkylene oxides, polyvinylidene fluoride, polytetrafluoroethylene, polyolefins, polyimides and ethylene-propylene-diene terpolymers and
optionally one or more additives.

9. Active material particles in the form of dispersible granules according to Claim 8, **characterized in that** the dispersible granules have a particle shape having sharp or round edges with approximately equal extensions in the three dimensions, determined in accordance with DIN ISO 3435.

10. Active material particles in the form of dispersible granules according to Claim 8 or 9, **characterized in that** no graphite is present.

11. Active material particles in the form of dispersible granules according to any of Claims 8 to 10, **characterized in that** the active material particles in the form of dispersible granules are not coated with carbon.

## Revendications

1. Procédé pour le traitement de matériaux d'électrodes pour piles, **caractérisé en ce que**
a) des mélanges contenant un ou plusieurs liants, un ou plusieurs liquides de dispersion et des particules de matériau actif comprenant des particules de silicium sont séchés, des particules de matériau actif étant ainsi obtenues sous forme de granulés dispersables,
étant entendu que les particules de matériau actif obtenues sous forme de granulés dispersables dans l'étape a) ne sont pas revêtues par du carbone, et
b) les particules de matériau actif obtenues sous forme de granulés dispersables dans l'étape a) sont mélangées avec un ou plusieurs solvants, des particules de matériau actif, qui ont été utilisées pour la préparation des particules de matériau actif sous forme de granulés dispersables, sont à nouveau libérées.

2. Procédé pour le traitement de matériaux d'électrodes pour piles selon la revendication 1, **caractérisé en ce que** les particules de matériau actif sous forme de granulés dispersables obtenues par séchage dans l'étape a) sont des agglomérats de particules de matériau actif, qui sont totalement ou partiellement enveloppés par un liant.

3. Procédé pour le traitement de matériaux d'électrodes pour piles selon la revendication 1 ou 2, **caractérisé en ce que** les particules de matériau actif des mélanges dans l'étape a) présentent avant le séchage des distributions de grosseur de particule pondérées en volume comportant des valeurs moyennes du diamètre d₅₀ de 0,03 à 100,0 µm.

4. Procédé pour le traitement de matériaux d'électrodes pour piles selon les revendications 1 à 3, **caractérisé en ce que** les particules de matériau actif dispersées obtenues dans l'étape b) possèdent des distributions de grosseur de particule pondérées en volume comportant des valeurs moyennes du diamètre d₅₀ de 0,03 à 100,0 µm.

5. Procédé pour le traitement de matériaux d'électrodes pour piles selon les revendications 1 à 4, **caractérisé en ce qu'**un ou plusieurs liants sont choisis dans le groupe comprenant les poly(acide acrylique) ou leurs sels alcalins, les poly(alcool vinylique), la cellulose ou des dérivés de cellulose, les poly(oxyde d'alkylène), le poly(fluorure de vinylidène), le polytétrafluoroéthylène, les polyoléfines, les polyimides et les terpolymères d'éthylène-propylène-diène.

6. Procédé pour le traitement de matériaux d'électrodes pour piles selon les revendications 1 à 5, **caractérisé en ce que** les particules de matériau actif sous forme de granulés dispersables obtenues dans l'étape a) ne sont soumises à aucune transformation, en particulier à aucune pyrolyse ou carbonisation, avant la réalisation de l'étape b).

7. Procédé pour la préparation d'électrodes pour piles, **caractérisé en ce que** les produits de procédé de l'étape b) des revendications 1 à 6 sont appliqués sur un substrat électriquement conducteur et sont ensuite séchés.

8. Particules de matériau actif sous forme de granulés dispersables constituées de
≥ 95 % en poids, par rapport au poids sec des particules de matériau actif sous forme de granulés dispersables, de particules de silicium,
un ou plusieurs liants choisis dans le groupe comprenant les poly(acide acrylique) ou leurs sels, les poly(alcool vinylique), la cellulose ou des dérivés de cellulose, les poly(oxyde d'alkylène), le poly(fluorure de vinylidène), le polytétrafluoroéthylène, les polyoléfines, les polyimides et les terpolymères d'éthylène-propylène-diène et éventuellement un ou plusieurs additifs.

9. Particules de matériau actif sous forme de granulés dispersables selon la revendication 8, **caractérisées en ce que** les granulés dispersables possèdent une forme de grain comportant des arêtes vives ou arrondies présentant des dimensions environ égales dans les trois dimensions, déterminées conformément à la norme DIN ISO 3435.

10. Particules de matériau actif sous forme de granulés dispersables selon la revendication 8 ou 9, **caractérisées en ce qu'**aucun graphite n'est contenu.

11. Particules de matériau actif sous forme de granulés dispersables selon les revendications 8 à 10, **caractérisées en ce que** les particules de matériau actif sous forme de granulés dispersables ne sont pas revêtues par du carbone.
